# EUROPÄISCHE PATENTSCHRIFT

(11) **EP 3 337 990 B1**
(45) Veröffentlichungstag und Bekanntmachung des Hinweises auf die Patenterteilung: **11.03.2020**
(21) Anmeldenummer: 16733552.0
(22) Anmeldetag: 30.06.2016
(51) Int. Cl.: F16C 25/08, F16C 19/18, F16C 33/58

(54) **VERFAHREN ZUR MONTAGE EINER WÄLZLAGEREINHEIT AUF DEN ROTOR EINES TURBOLADERS**
METHOD FOR MOUNTING A ROLLING BEARING UNIT ON THE ROTOR OF A TURBOCHARGER
PROCÉDÉ SERVANT AU MONTAGE D'UNE UNITÉ FORMANT PALIER DE ROULEMENT SUR LE ROTOR D'UN TURBOCOMPRESSEUR

(30) Priorität: 18.08.2015 DE 102015215750
(43) Veröffentlichungstag der Anmeldung: 27.06.2018
(73) Patentinhaber: Vitesco Technologies GmbH, 30165 Hannover (DE)
(72) Erfinder: EHRHARD, Jan, 69168 Wiesloch (DE)
(74) Vertreter: Waldmann, Georg Alexander
(86) Internationale Anmeldenummer: PCT/EP2016/065256
(87) Internationale Veröffentlichungsnummer: WO 2017/029006

(56) Entgegenhaltungen:
- WO-A1-2012/079881
- DE-A1- 4 334 339
- US-A- 4 676 667
- US-A1- 2007 036 477
- US-A1- 2014 369 865

## Beschreibung

Die Erfindung betrifft ein Verfahren zur Montage einer Wälzlagereinheit auf den Rotor eines Turboladers.

Es ist bereits bekannt, die Läuferwelle des aus Turbinenrad, Verdichterrad und Läuferwelle bestehenden Laufzeugs eines Abgasturboladers in Wälzlager drehbar zu lagern. Die Läuferwelle trägt in ihrem einen Endbereich das Turbinenrad einer abgasgetriebenen Turbine und in ihrem anderen Endbereich das Verdichterrad eines Verdichters. Das Laufzeug und somit die Läuferwelle eines Abgasturboladers läuft im Betrieb in Verbindung mit einem Verbrennungsmotor mit veränderlichen, sehr hohen Drehzahlen und muss bei hoher Belastung und hohen Temperaturen lange Standzeiten aufweisen. Eine optimierte Lagerung der Läuferwelle ist hierfür eine grundlegende Voraussetzung.

Üblicherweise werden bei Abgasturboladern Gleitlagerungen eingesetzt. Aufgrund der geringeren Reibung werden in zunehmendem Maße die Gleitlagerungen durch Wälzlager ersetzt. Typisch sind bei einer derartigen Anordnung zwei Wälzlager vorgesehen, die jeweils Wälzkörper aufweisen. Den Wälzlagern sind jeweils radial innere Lagerelemente, insbesondere innere Lagerringe zugeordnet. Diese sind jeweils mit der Welle form- oder kraftschlüssig verbunden oder bilden einen integralen Bestandteil der Welle. Des Weiteren ist den Wälzlagern je ein äußeres Lagerelement, insbesondere ein Lagerhülsenelement zugeordnet. Dabei können die zwei Lagerhülsenelemente separat angeordnet oder auch in einer gemeinsamen Lagerhülse zusammengefasst oder auf andere Weise miteinander verbunden sein. Die inneren Lagerelemente und die äußeren Lagerelemente weisen jeweils Laufflächen oder Laufbahnen für die Wälzkörper auf, auf denen die Wälzkörper abrollen. Die Ausgestaltung und Anordnung der Laufflächen oder Laufbahnen sowie die Wälzkörper sind dabei so gewählt oder gestaltet, dass die Wälzlager sowohl radiale Lagerkräfte als auch axiale Lagerkräfte aufnehmen können.

Dabei ist es insbesondere im Hinblick auf die axiale Position und das axiale Spiel der Lagerung wichtig, dass zum Zweck einer Justage der beiden Wälzlager der axiale Abstand zwischen den inneren und äußeren Lagerelementen auf den axialen Abstand zwischen den beiden Lagerhülsenelementen abgestimmt oder angepasst werden kann und die axiale Position der Wälzlager in dem aufnehmenden Lagergehäuse bestimmt ist.

Probleme ergeben sich beispielsweise bei im Betrieb auftretenden Temperaturwechseln, bei denen eine Längendehnung der Läuferwelle und/oder der äußeren Lagerhülse stattfindet, die eine Dejustierung der Lager (Vergrößerung bzw. Verkleinerung des Lagerspiels) bewirken kann. Auch die Montage einer derartigen Lageranordnung in einem aufnehmenden Lagergehäuse kann aufwendig sein.

Aus der WO 2012/079881 A1 ist eine Wellenlagerung für einen Abgasturbolader bekannt, welche zwei separate äußere Lagerringe aufweist, die mittels einer Federanordnung unter Vorspannung gekoppelt sind, wodurch Spielfreiheit der Wälzlager gegeben und die Position in Bezug auf die Läuferwelle festgelegt ist.

Aus der Zeitschrift MTZ, 72 Jg., 04/2011, Seiten 302 - 307, ist eine Kugellagereinheit für die Läuferwelle eines Abgasturboladers bekannt. Diese Kugellagereinheit weist zwei innenliegende Lagerschalen aus warmfesten Lagerstahl auf, die im montierten Zustand auf die Läuferwelle des Abgasturboladers aufgepresst sind. Die Kugeln dieses Kugellagers bestehen aus Metall oder Keramik und werden durch einen beschichteten Stahlkäfig (kann auch Kunststoff sein) voneinander getrennt gehalten und geführt. Die äußeren Lagerhülsenelemente sind hier in eine gemeinsame Lagerhülse zusammengefasst und sind aus einem hochvergüteten Lagerstahl hergestellt.

Des Weiteren ist in der DE 10 2014 212 155.8 der Anmelderin eine Lagervorrichtung für eine Welle einer Abgasturboladereinrichtung eines Verbrennungsmotors beschrieben, welche wenigstens zwei axial voneinander beabstandete Wälzlager mit Wälzkörpern aufweist. Dabei sind bei jedem der Wälzlager für die Wälzkörper eine innere Lauffläche direkt auf der Läuferwelle angeordnet sowie eine äußere Lauffläche in einem jeweils zugehörigen äußeren Lagerhülsenelement vorgesehen. Die beiden Lagerhülsenelemente sind koaxial zueinander mittels einer gemeinsamen Führungseinrichtung positioniert und so zu einer Einheit zusammengefasst. Die Führungseinrichtung setzt eine Verdrehung wenigstens einer der Lagerhülsenelemente um die Wellenlängsachse in eine Abstandsänderung der beiden Lagerhülsenelemente um, wodurch die beiden Lagerhülsenelemente in Axialrichtung bezüglich ihres Abstandes zueinander justierbar und/oder fixierbar und/oder mittels eines Federelementes vorspannbar sind.

In der DE 10 2014 220 618.9 der Anmelderin ist eine Lagereinheit für das eine Läuferwelle aufweisende Laufzeug eines Abgasturboladers beschrieben, welche ein Lagergehäuse mit einer Verdichterseite zur Verbindung mit einem Verdichtergehäuse des Abgasturboladers, eine Turbinenseite zur Verbindung mit einem Turbinengehäuse des Abgasturboladers und eine zylindrische Lageraufnahmeöffnung mit einer darin aufgenommenen Lagervorrichtung aufweist. Die Lageraufnahmeöffnung ist in Radialrichtung durch einen Innenmantel des Lagergehäuses begrenzt. Die Lagervorrichtung weist zwei in Axialrichtung voneinander beabstandete Wälzlager auf, von denen eines im Lagergehäuse turbinenseitig und das andere im Lagergehäuse verdichterseitig angeordnet ist. Jedem der Wälzlager ist für dessen Wälzkörper ein inneres Lagerelement mit einer inneren Lauffläche auf der Läuferwelle des Laufzeugs sowie ein äußeres Lagerhülsenelement mit einer äußeren Lauffläche zugeordnet. Die beiden äußeren Lagerhülsenelemente sind auf einer gemeinsamen Führung konzentrisch und in axialer Richtung so zueinander positioniert und fixiert, dass sie eine Lagerhülseneinheit bilden und Spielfreiheit der Wälzlager gewährleistet ist. Der Innenmantel des Lagergehäuses weist eine stufenförmige Anlageschulter auf. Die Außendurchmesser der beiden Lagerhülsenelemente sind unterschiedlich. Das Lagerhülsenelement mit dem größeren Außendurchmesser liegt in Axialrichtung an der Anlageschulter des Innenmantels des Lagergehäuses an.

Aus der DE 11 2010 001 779 T5 ist ein Turbolader bekannt, welcher einen in sein Lagergehäuse eingesetzten Wälzlagereinsatz aufweist. Dieser Wälzlagereinsatz enthält mindestens einen inneren Laufring und mindestens einen äußeren Laufring und eine Reihe von Wälzelementen, von denen jedes mit einem der inneren und einem der äußeren Laufringe in Kontakt steht. Bei diesem Turbolader wird eine unerwünschte Drehung des äußeren Laufringes im montierten Zustand unter Verwendung separater konstruktiver Elemente, beispielsweise unter Verwendung von Ausnehmungen und Vorsprüngen, verhindert.

Weitere Lageranordnungen mit Wälzlagern, die mit einer in Axialrichtung wirkenden und mittels Federelementen erzeugten Vorspannung beaufschlagt sind, sind aus den Dokumenten US 4 676 667 A, DE 4 334 339 A1, US 2014/369 865 A1 und US 2007/036 477 A1 bekannt.

Die Aufgabe der Erfindung besteht darin, ein verbessertes Verfahren zur Montage einer Wälzlagereinheit auf den Rotor und in das Lagergehäuse eines Turboladers sowie einen nach diesem Verfahren hergestellten Turbolader anzugeben.

Diese Aufgabe wird durch ein Verfahren mit den im Anspruch 1 angegebenen Merkmalen bzw. durch einen Turbolader mit den im Anspruch 6 angegebenen Merkmalen gelöst. Vorteilhafte Ausgestaltungen und Weiterbildungen der Erfindung sind in den abhängigen Ansprüchen angegeben.

Gemäß der vorliegenden Erfindung wird ein Verfahren zur Montage einer Wälzlagereinheit auf den Rotor und in das Lagergehäuse eines Turboladers bereitgestellt, bei welchem ein Einlegen eines durch Ausübung von Druck verformbaren Bauteils in den Zwischenraum zwischen zwei Wälzlagern der Rotorbaugruppe, zu welcher eine Rotorwelle, an der Rotorwelle befestigte oder in die Rotorwelle integrierte, voneinander einen Abstand aufweisende innere Lagerringe, in die inneren Lagerringe eingesetzte Wälzkörper und ebenfalls einen Abstand voneinander aufweisende äußere Lagerringe gehören, und eine Verformung des in den Zwischenraum zwischen den beiden Wälzlagern eingelegten Bauteils durch Ausübung von Druck zur Einstellung einer gewünschten Vorspannung zwischen den äußeren Lagerringen der Wälzkörper vorgenommen werden.
Weiterhin ist das erfindungsgemäße Verfahren dadurch gekennzeichnet, dass die äußeren Lagerringe und der Innenmantel des Lagergehäuses nicht umfangssymmetrisch ausgebildet sind und die Verformung des in den Zwischenraum zwischen den beiden Wälzlagern (6,7) eingelegten Bauteils (14) derart vorgenommen wird, dass sich bei der Ausübung von Druck auf das verformbare Bauteil dessen Form an die nicht umfangssymmetrische Form der äußeren Lagerringe und des Innenmantels des Lagergehäuses anpasst, wodurch gleichzeitig eine Verdrehsicherung der äußeren Lagerringe (12, 13) gegenüber dem verformten Bauteil (14) und dem Lagergehäuse (1)gebildet wird.

In vorteilhafter Weise handelt es sich bei dem verformbaren Bauteil um ein verformbares Blechformteil. Die Verformung des verformbaren Bauteils kann direkt innerhalb des Lagergehäuses oder in einer externen Verformvorrichtung erfolgen. Sie erfolgt vorzugsweise durch Ausübung von hydraulischem Druck, der durch eingepresstes Öl hervorgerufen wird, oder durch mechanischen Druck.

Weitere vorteilhafte Eigenschaften und Weiterbildungen der Erfindung ergeben sich aus der nachfolgenden beispielhaften Erläuterung der Erfindung anhand der Zeichnungen. Es zeigt:
- Figuren 1 - 3: Längsschnittdarstellungen zur Erläuterung eines ersten Ausführungsbeispiels für ein Verfahren gemäß der Erfindung,
- Figur 4: eine Längsschnittdarstellung zur Erläuterung einer vorteilhaften Ausgestaltung der Erfindung,
- Figur 5: eine Längsschnittdarstellung zur Erläuterung eines zweiten Ausführungsbeispiel für ein Verfahren gemäß der Erfindung,
- Figur 6: eine Längsschnittdarstellung zur Erläuterung einer ersten alternativen Ausgestaltung der Erfindung,
- Figur 7: eine Längsschnittdarstellung einer zweiten alternativen Ausgestaltung der Erfindung und
- Figuren 8 - 13: Längsschnittdarstellungen zur Erläuterung eines dritten Ausführungsbeispiels für ein Verfahren gemäß der Erfindung.

Ein Turbolader weist eine Turbine, einen Verdichter und eine Lagereinheit auf. Die Turbine enthält ein in einem Turbinengehäuse angeordnetes Turbinenrad. Der Verdichter enthält ein in einem Verdichtergehäuse angeordnetes Verdichterrad. Das Turbinenrad ist im Endbereich einer Rotorwelle an dieser Rotorwelle befestigt. Das Verdichterrad ist im anderen Endbereich der Rotorwelle an dieser Rotorwelle befestigt. Die Rotorwelle ist in einem Lagergehäuse der Lagereinheit gelagert. An das Lagergehäuse ist auf der Turbinenseite das Turbinengehäuse und auf der Verdichterseite das Verdichtergehäuse angeschlossen. Im Lagergehäuse ist eine Lagervorrichtung angeordnet, zu welcher Wälzlager gehören. Die Wälzlager gehören zu einer Rotorbaugruppe, zu welcher die Rotorwelle, an der Rotorwelle befestigte oder in die Rotorwelle integrierte, voneinander einen Abstand aufweisende innere Lagerringe, in die inneren Lagerringe eingesetzte Wälzkörper und ebenfalls einen Abstand voneinander aufweisende äußere Lagerringe gehören.

Beim Zusammenbau des Turboladers ist es notwendig die Rotorbaugruppe in das Lagergehäuse des Turboladers einzusetzen.

Bei dem erfindungsgemäßen Verfahren zur Montage einer Wälzlagereinheit auf den Rotor und in das Lagergehäuse eines Turboladers erfolgt ein Einlegen eines durch Druck verformbaren Bauteils, vorzugsweise eines Blechformteils, in den Zwischenraum zwischen den beiden Wälzlagern der Rotorbaugruppe und eine Verformung des in den Zwischenraum zwischen den beiden Wälzlagern eingelegten Bauteils durch Ausübung von Druck zur Einstellung einer gewünschten Vorspannung zwischen den äußeren Lagerringen der Wälzkörper und damit zwischen den beiden Wälzlagern. Die genannte Verformung des durch Druck verformbaren Bauteils kann innerhalb des Lagergehäuses oder in einer externen Verformvorrichtung vorgenommen werden.

Erfindungsgemäß weisen die äußeren Lagerringe und der Innenmantel des Lagergehäuses eine nicht umfangssymmetrische Form auf und das verformbare Bauteil passt sich bei seiner Verformung an die genannten nicht umfangssymmetrischen Formen an. Dadurch wird eine Verdrehsicherung der äußeren Lagerringe gegenüber dem verformten Bauteil und dem Lagergehäuse erreicht.

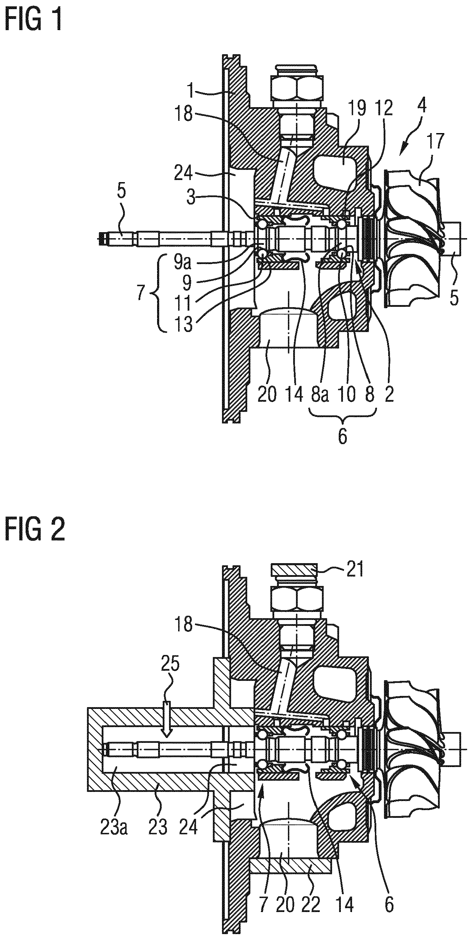

Die Figuren 1 - 3 zeigen Längsschnittdarstellungen zur Erläuterung eines ersten Ausführungsbeispiels für ein Verfahren gemäß der Erfindung.

Bei diesem ersten Ausführungsbeispiel wird zunächst eine Rotorbaugruppe 4 zusammengesetzt, die eine Rotorwelle 5, an der Rotorwelle 5 befestigte oder in die Rotorwelle 5 integrierte, voneinander einen Abstand aufweisende innere Lagerringe 8 und 9, in die inneren Lagerringe eingesetzte Wälzkörper 10 und 11 sowie ebenfalls einen Abstand voneinander aufweisende äußere Lagerringe 12 und 13 enthalten. Des Weiteren gehört bei diesem Ausführungsbeispiel zur Rotorbaugruppe auch ein an der Rotorwelle 5 befestigtes Turbinenrad 17. Ferner weist die genannte Rotorbaugruppe 4 ein durch Ausübung von Druck verformbares Bauteil 14 auf, bei welchem es sich vorzugsweise um ein Blechformteil handelt, welches beim gezeigten Ausführungsbeispiel wellenförmig ausgebildet ist. Dieses durch Druck verformbare Bauteil 14 ist lose in den Zwischenraum zwischen den beiden Wälzlagern 6 und 7 der Rotorbaugruppe eingelegt. Zum Wälzlager 6 gehören der innere Lagerring 8, eine innere Lauffläche 8a, der äußere Lagerring 12 und Wälzlager 10. Zum Wälzlager 7 gehören der innere Lagerring 9, eine innere Lauffläche 9a, der äußere Lagerring 13 und Wälzkörper 11.

Die wie vorstehend beschriebene zusammengesetzte Rotorbaugruppe 4 wird in eine Lageraufnahmeöffnung 2 des Lagergehäuses 1 des Turboladers eingesetzt, wie es in der Figur 1 veranschaulicht ist. Das Lagergehäuse 1 weist des Weiteren eine Schmierölzufuhr 18, durch welche im späteren Betrieb des Turboladers den Lagern Schmieröl zugeführt wird, einen Wasserkern 19 und einen Schmierölablass 20 auf.

Das durch Druck verformbare Bauteil 14 ist nach dem Einsetzen der Rotorbaugruppe 4 in die Lageraufnahmeöffnung des Lagergehäuses 1 noch im unverformten, losen Zustand zwischen den beiden Wälzlagern 6 und 7 angeordnet.

Nach dem Einsetzen der Rotorbaugruppe 4 in die Lageraufnahmeöffnung 2 des Lagergehäuses 1 werden die Öffnungen des Lagergehäuses 1 mittels geeigneter Deckel 21, 22, 23 verschlossen. Dabei wird mittels des Deckels 21 die Schmierölzufuhr 18, mittels des Deckels 22 der Schmierölablass 20 und mittels des Deckels 23 die verdichterseitige Öffnung 24 des Lagergehäuses 1 verschlossen. Dieser verschlossene Zustand ist in der Figur 2 dargestellt.

Nach dem Verschließen der Öffnungen des Lagergehäuses mittels der Deckel 21, 22, 23 erfolgt ein Zuführen von Hydrauliköl durch eine im Deckel 23 vorgesehene Zuführöffnung, wie es in der Figur 2 durch den Pfeil 25 veranschaulicht ist.

Dieses Hydrauliköl fließt zunächst in den Innenraum 23a des Deckels 23 und von dort aus durch das Wälzlager 7 in den Zwischenraum zwischen den Wälzlagern 7 und 6, in welchem sich das verformbare Bauteil 14 befindet. Dieser Hydraulikölfluss übt auf das verformbare Bauteil 14 Druck aus, durch welchen sich dieses Bauteil 14 in vorgegebener Weise verformt. Durch diese Verformung kommt das Bauteil 14 sowohl in Kontakt mit dem äußeren Lagerring 12 des Wälzlagers 6 als auch mit dem äußeren Lagerring 13 des Wälzlagers 7 und wird zwischen diesen beiden äußeren Lagerringen eingeklemmt. Dadurch entsteht in Abhängigkeit vom eingestellten Öldruck des zugeführten Hydrauliköls eine gewünschte Vorspannung zwischen den beiden äußeren Lagerringen 12 und 13 und damit zwischen den beiden Wälzlagern 6 und 7.

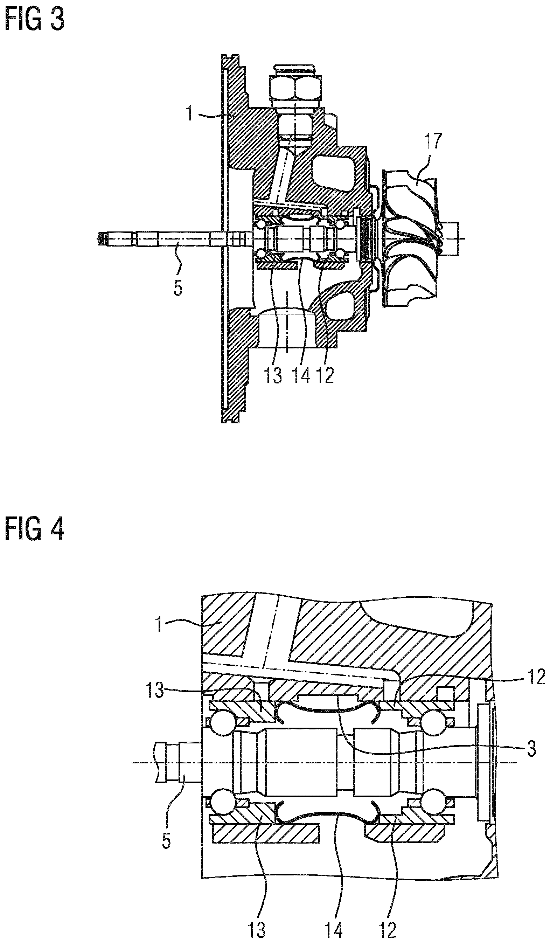

Nach dem vorstehend beschriebenen Verformen des Bauteils 14 und dem dadurch erzielten Einstellen einer gewünschten Vorspannung zwischen den beiden äußeren Lagerringen 12 und 13 der Wälzlager 6 und 7 wird das zugeführte Hydrauliköl durch den Schmierölablass 20 abgelassen und es werden die Deckel 21, 22 und 23 wieder entfernt. Dieser Zustand ist in der Figur 3 veranschaulicht, aus welcher insbesondere die durch das Ausüben von Druck bewirkte Einklemmung des Bauteils 14 zwischen den beiden äußeren Lagerringen 12 und 13 veranschaulicht ist.

Beim vorstehend beschriebenen Verfahren wird anstelle eines starren Bauteils oder eines Federelementes ein verformbares Bauteil zur Einstellung einer gewünschten Vorspannung zwischen den beiden Wälzlagern verwendet, wobei dieses verformbare Bauteil zunächst lose in den Zwischenraum zwischen den beiden Wälzlagern eingelegt wird und dann innerhalb des Lagergehäuses durch Ausübung von hydraulischem Druck verformt wird. Nach diesem Verformungsvorgang ist die Geometrie des Bauteils festgelegt und bleibt im späteren Betrieb des Turboladers unverändert. Je nach Wahl des Hydrauliköldrucks und der gewählten Ausgangsform des verformbaren Bauteils 14 lässt sich auf diese Weise eine gewünschte axiale Vorspannung zwischen den beiden Wälzlagern einstellen.

Gemäß der Erfindung wird, wie in der Figur 4 veranschaulicht ist, darüber hinaus durch die Verformung des verformbaren Bauteils 14 eine Verdrehsicherung erreicht. Zu diesem Zweck weisen die äußeren Lagerringe 12, 13 der Wälzlager und der Innenmantel 3 des Lagergehäuses 1 eine nicht umfangsymmetrische Form auf. Diese nicht umfangsymmetrische Form kann beispielsweise durch ein Einbringen von Nuten, Rändelungen, Nasen, etc., in die äußeren Lagerringe 12, 13 bzw. den Innenmantel 3 des Lagergehäuses 1 erreicht werden, wie es in der Figur 4 im Bereich der dzu eingezeichneten Ovale veranschaulicht ist.

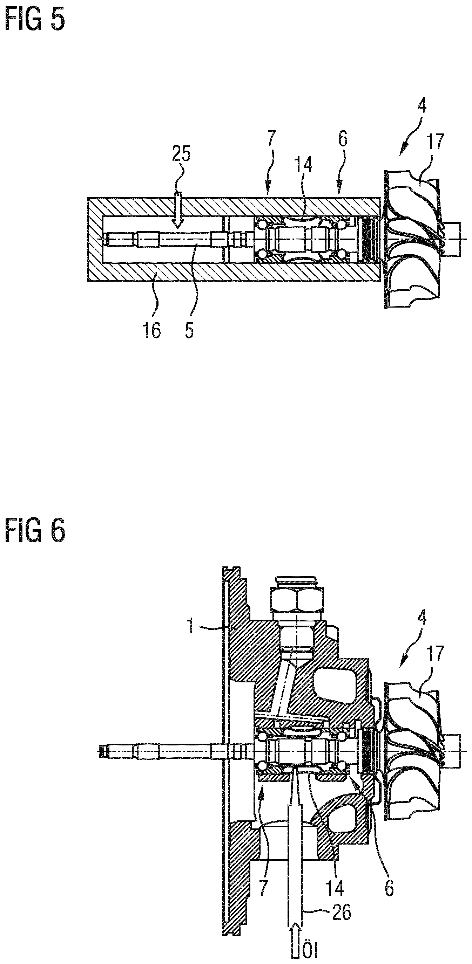

Die Figur 5 zeigt eine Längsschnittdarstellung zur Erläuterung eines zweiten Ausführungsbeispiels für ein Verfahren gemäß der Erfindung. Bei diesem zweiten Ausführungsbeispiel erfolgt die Verformung des in den Zwischenraum zwischen den beiden Wälzlagern lose eingelegten Bauteils 14 nicht im Lagergehäuse 1 des Turboladers, sondern in einer externen Verformvorrichtung 16.

Bei diesem zweiten Ausführungsbeispiel wird ebenso wie beim ersten Ausführungsbeispiel zunächst eine Rotorbaugruppe 4 zusammengesetzt, die eine Rotorwelle 5, an der Rotorwelle 5 befestigte oder in die Rotorwelle 5 integrierte, voneinander einen Abstand aufweisende innere Lagerringe 8 und 9, in die inneren Lagerringe eingesetzte Wälzkörper 10 und 11 sowie ebenfalls einen Abstand voneinander aufweisende äußere Lagerringe 12 und 13 aufweisen. Des Weiteren gehört bei diesem Ausführungsbeispiel zur Rotorbaugruppe 4 auch ein an der Rotorwelle 5 befestigtes Turbinenrad 17. Ferner weist die genannte Rotorbaugruppe 4 ein durch Ausübung von Druck verformbares Bauteil 14 auf, bei welchem es sich vorzugsweise um ein Blechformteil handelt, welches beim gezeigten Ausführungsbeispiel wellenförmig ausgebildet ist. Dieses durch Druck verformbare Bauteil 14 ist lose in den Zwischenraum zwischen den beiden Wälzlagern 6 und 7 der Rotorbaugruppe eingelegt. Zum Wälzlager 6 gehören der innere Lagerring 8, eine innere Lauffläche 8a, der äußere Lagerring 12 und Wälzkörper 10. Zum Wälzlager 7 gehören der innere Lagerring 9, eine innere Lauffläche 9a, der äußere Lagerring 13 und Wälzkörper 11.

Die wie vorstehend beschriebene zusammengesetzte Rotorbaugruppe 4 wird in die genannte externe Verformvorrichtung 16 eingesetzt, wobei das Turbinenrad 17 außerhalb der externen Verformvorrichtung 16 verbleibt und wobei die externe Verformvorrichtung 16 in ihrem dem Turbinenrad 17 benachbarten Bereich flüssigkeitsdicht mit der Rotorbaugruppe 4 verbunden ist.

Nach dem Einsetzen der Rotorbaugruppe 4 in die externe Verformvorrichtung 16 erfolgt ein Zuführen von Hydrauliköl durch eine in der externen Verformvorrichtung 16 vorgesehene Zufuhröffnung, wie es in der Figur 5 durch den Pfeil 25 veranschaulicht ist.

Dieses Hydrauliköl fließt durch die Zufuhröffnung in den Innenraum der externen Verformvorrichtung und dort weiter durch das Wälzlager 7 in den Zwischenraum zwischen den Wälzlager 7 und 6, in welchem sich das verformbare Bauteil 14 befindet. Dieser Ölfluss übt auf das verformbare Bauteil 14 Druck aus, durch welchen sich dieses Bauteil verformt. Durch diese Verformung kommt das Bauteil 14 sowohl in Kontakt mit dem äußeren Lagerring 12 des Wälzlagers 6 als auch mit dem äußeren Lagerring 13 des Wälzlagers 7 und wird zwischen diesen beiden äußeren Lagerringen eingeklemmt. Dadurch entsteht in Abhängigkeit vom eingestellten Öldruck des zugeführten Hydrauliköls eine gewünschte Vorspannung zwischen den beiden äußeren Lagerringen 12 und 13 und damit zwischen den Wälzlagern 6 und 7.

Auch bei dieser Ausgestaltung der Erfindung, die anhand der Figur 5 veranschaulicht ist, wird durch die Verformung des verformbaren Bauteils 14 eine Verdrehsicherung erreicht. Zu diesem Zweck weisen die äußeren Lagerringe 12, 13 der Wälzlager und die Verformvorrichtung 16 eine nicht umfangsymmetrische Form auf. Diese nicht umfangsymmetrische Form kann beispielsweise durch ein Einbringen von Nuten in die Stirnflächen der äußeren Lagerringe 12, 13 und die Innenkontur der Verformvorrichtung 16 erreicht werden. Die Nut in der Innenkontur der Verformvorrichtung 16 muss der Nut im Innenmantel 3 des Lagergehäuses 1 entsprechen, in welches die Rotorbaugruppe 4 nach der Herausnahme aus der externen Verformvorrichtung 16 eingesetzt wird.

Nach diesem Verformen wird die Rotorbaugruppe 4 aus der externen Verformvorrichtung 16 herausgenommen und in die Lageraufnahmeöffnung 2 des Lagergehäuses 1 eingesetzt.

Auch bei diesem anhand der Figur 5 veranschaulichten Verfahren wird anstelle eines starren Bauteils oder eines Federelementes ein verformbares Bauteil 14 zur Einstellung einer gewünschten Vorspannung zwischen den beiden Wälzlagern verwendet, wobei dieses verformbare Bauteil zunächst lose in den Zwischenraum zwischen den beiden Wälzlagern eingelegt wird und dann innerhalb einer externen Verformvorrichtung durch Ausübung von hydraulischem Druck verformt wird. Nach diesem Verformungsvorgang ist die Geometrie des Bauteils festgelegt und bleibt im späteren Betrieb des Turboladers unverändert. Je nach Wahl des Öldrucks und der gewünschten Ausgangsform des verformbaren Bauteils lässt sich auf diese Weise eine gewünschte axiale Vorspannung zwischen den beiden Wälzlagern einstellen.

Die Figur 6 zeigt eine Längsschnittdarstellung zur Erläuterung einer ersten alternativen Ausgestaltung der Erfindung.

Bei dieser ersten alternativen Ausgestaltung wird als verformbares Bauteil 14 ein geschlossener Einlegering, der beispielsweise aus Blech besteht, in den Zwischenraum zwischen den beiden Wälzlagern 6 und 7 lose eingelegt und dann unter Verwendung einer Lanze 26 mit Hydrauliköl solange beaufschlagt, bis er die gewünschte Form aufweist bzw. bis die gewünschte axiale Vorspannung zwischen den beiden Wälzlagern erreicht ist.

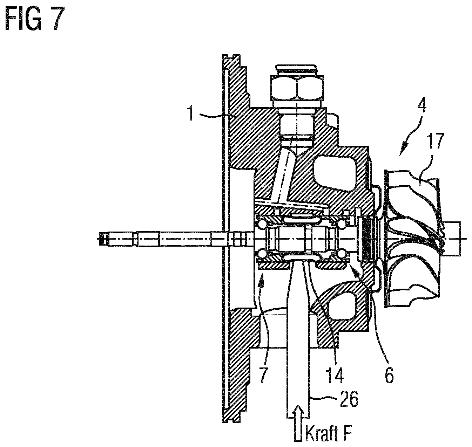

Die Figur 7 zeigt eine Längsschnittdarstellung zur Erläuterung einer zweiten alternativen Ausgestaltung der Erfindung.

Bei dieser zweiten alternativen Ausgestaltung wird als verformbares Bauteil 14 wiederum ein geschlossener Einlegering verwendet, der beispielsweise aus Blech besteht, in den Zwischenraum zwischen den beiden Wälzlagern 6 und 7 lose eingelegt wird und dann unter Verwendung einer Lanze 26, auf welche eine mechanische Kraft F ausgeübt wird, mechanisch solange verformt, bis er die gewünschte Form aufweist bzw. bis die gewünschte axiale Vorspannung zwischen den beiden Wälzlagern eingestellt ist.

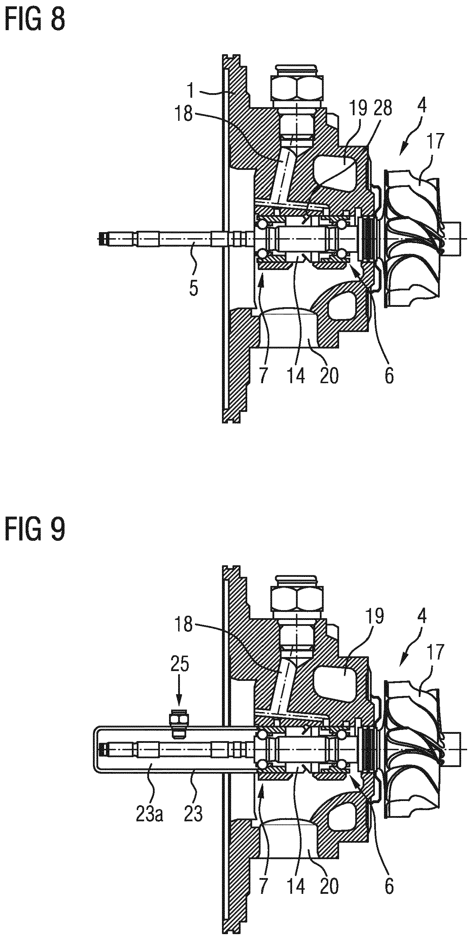

Die Figur 8 - 13 zeigen Längsschnittdarstellungen zur Erläuterung eines dritten Ausführungsbeispiels für ein Verfahren gemäß der Erfindung.

Bei diesem dritten Ausführungsbeispiel erfolgt ebenso wie bei ersten Ausführungsbeispiel eine Verformung des verformbaren Bauteils 14 innerhalb des Lagergehäuses 1 unter Verwendung von Hydrauliköl. Alternativ dazu kann auch Wasser oder Druckluft, etc. verwendet werden.

Auch bei diesem dritten Ausführungsbeispiel wird zunächst eine Rotorbaugruppe 4 zusammengesetzt, die eine Rotorwelle 5, an der Rotorwelle 5 befestigte oder in die Rotorwelle 5 integrierte, voneinander einen Abstand aufweisende innere Lagerringe 8 und 9, in die inneren Lagerringe eingesetzte Wälzkörper 10 und 11 sowie ebenfalls einen Abstand voneinander aufweisende äußere Lagerringe 12 und 13 enthalten. Des Weiteren gehört zur Rotorbaugruppe 4 auch ein an der Rotorwelle 5 befestigtes Turbinenrad 17. Ferner weist die genannte Rotorbaugruppe 4 ein durch Ausübung von Druck verformbares Bauteil 14 auf, bei welchem es sich vorzugsweise um ein Blechformteil handelt, welches beim gezeigten Ausführungsbeispiel eine Einbuchtung hat. Dieses durch Druck verformbare Bauteil 14 ist lose in den Zwischenraum zwischen den beiden Wälzlagern 6 und 7 der Rotorbaugruppe eingelegt. Zum Wälzlager 6 gehören der innere Lagerring 8, eine innere Lauffläche 8a, der äußere Lagerring 12 und Wälzkörper 10. Zum Wälzlager 7 gehören der innere Lagerring 9, eine innere Lauffläche 9a, der äußere Lagerring 13 und Wälzkörper 11.

Die wie vorstehend beschriebene zusammengesetzte Rotorbaugruppe 4 wird in eine Lageraufnahmeöffnung 2 des Lagergehäuses 1 des Turboladers eingesetzt, wie es in der Figur 8 veranschaulicht ist. Das Lagergehäuse weist des Weiteren eine Schmierölzufuhr 18, durch welche im späteren Betrieb des Turboladers den Lagern Schmieröl zugeführt wird, einen Wasserkern 19 und einen Schmierölablass 20 auf. Ferner weist der Innenmantel 3 des Lagergehäuses eine Einkerbung 28 auf.

Das durch Druck verformbare Bauteil 14 ist nach dem Einsetzen der Rotorbaugruppe 4 in die Lageraufnahmeöffnung des Lagergehäuses 1 noch im unverformten, losen Zustand zwischen den beiden Wälzlagern 6 und 7 angeordnet.

Nach dem Einsetzen der Rotorbaugruppe 4 in die Lageraufnahmeöffnung 2 des Lagergehäuses 1 werden die Öffnungen des Lagergehäuses 1 mittels geeigneter Deckel verschlossen, von denen in der Figur 9 lediglich ein die verdichterseitige Öffnung des Lagergehäuses verschließender Deckel 23 dargestellt ist.

Nach dem Verschließen der Öffnungen des Lagergehäuses mittels der genannten Deckel erfolgt ein Zuführen von Hydrauliköl durch eine im Deckel 23 vorgesehene Zuführöffnung, wie es in der Figur 9 durch den Pfeil 25 veranschaulicht ist.

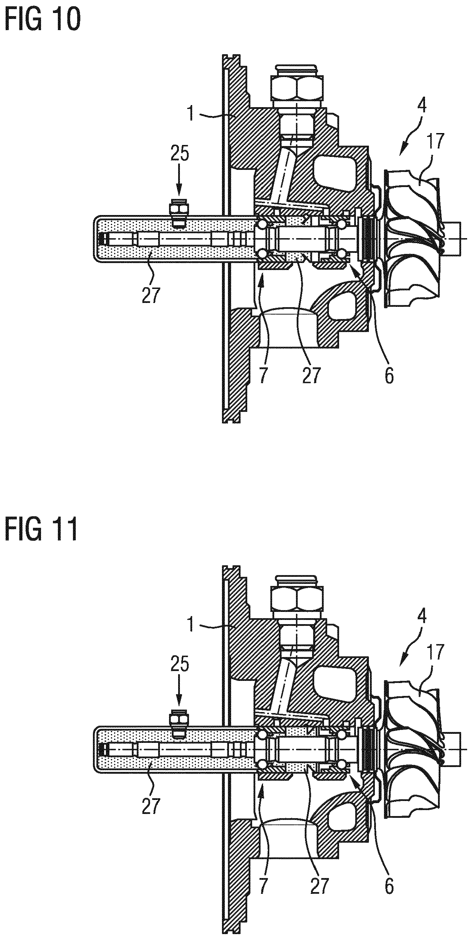

Dieses Hydrauliköl 27 fließt zunächst in den Innenraum 23a des Deckels 23 und von dort aus durch das Wälzlager 7 in den Zwischenraum zwischen den Wälzlagern 7 und 6, in welchem sich das verformbare Bauteil 14 befindet, wie es in der Figur 10 veranschaulicht ist.

Die Figur 11 veranschaulicht, wie durch den Druck, den das Hydrauliköl auf das verformbare Bauteil 14 ausübt, der in Druckrichtung hintere Endbereich des verformbaren Bauteils 14 in Richtung zum äußeren Lagerring des Wälzlagers 6 gedrückt wird.

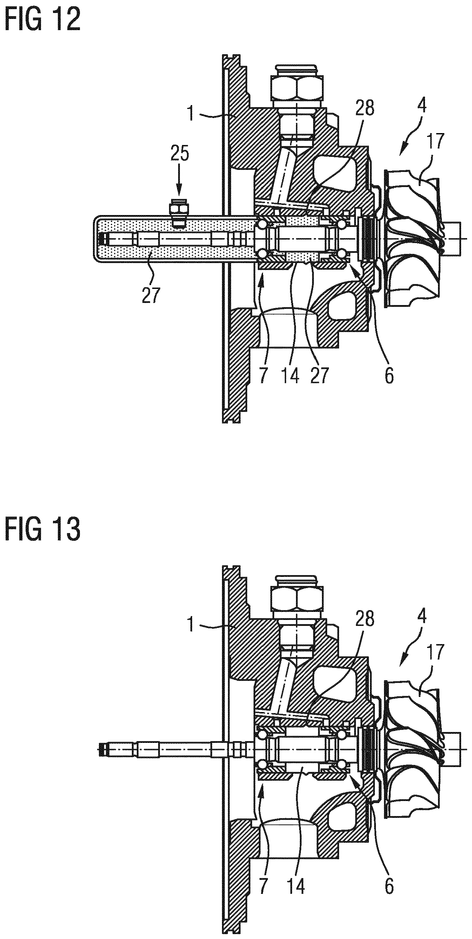

Dieses Ausüben von Druck durch Einpressen des Hydrauliköls geschieht solange, bis das verformbare Bauteil 14 zwischen den beiden äußeren Lagerringen der Wälzlager eingeklemmt ist, die gewünschte axiale Vorspannung zwischen den beiden Wälzlagern vorliegt und das Bauteil 14 auch den Bereich der Ausbuchtung 28 im Innenmantel 3 des Lagergehäuses 1 ausfüllt. Dies ist in der Figur 12 veranschaulicht.

Die Figur 13 zeigt schließlich den Endzustand des Verformungsprozesses, nachdem das Hydrauliköl abgelassen wurde und der Deckel 23 wieder entfernt wurde. Aufgrund des Umstandes, dass das verformte Bauteil 14 nicht nur die gewünschte axiale Vorspannung zwischen den beiden Wälzlagern sicherstellt, sondern auch den Bereich der Ausbuchtung 28 des Innenmantels des Lagergehäuses ausfüllt, ist auch hier eine Verdrehsicherung gegeben.

Bei Verwendung der oben beschriebenen Erfindung entfällt die Notwendigkeit, komplexe Bauteile mit aufwendiger Bearbeitung einzusetzen. Darüber hinaus erfolgt durch das oben beschriebene Verformen des verformbaren Bauteils auch ein Ausgleich von Bauteiltoleranzen, was insbesondere bei einer Massenfertigung von Vorteil ist. Des Weiteren können Toleranzen der umgebenden Bauteile größer dimensioniert sein, da die Einstellung der gewünschten axialen Vorspannung zwischen den Wälzlagern durch die Verformung eines lose eingelegten, verformbaren Bauteils erfolgt. Ferner ist die Verwendung eines derartigen beispielsweise aus Blech bestehenden verformbaren Bauteils preisgünstiger als die Einstellung der gewünschten axialen Vorspannung mittels einer Feder.

Mittels der oben beschriebenen Erfindung können nach alledem folgende vorteilhafte Eigenschaften realisiert werden.
- die Einstellung eines gewünschten Abstandes zwischen zwei Wälzlagern,
- die Einstellung einer gewünschten Vorspannung zwischen zwei Wälzlagern,
- ein Ausgleich von Bauteiltoleranzen,
- eine Verdrehsicherung der äußeren Lagerringe gegenüber dem verformten Bauteil und dem Lagergehäuse.

Beim oben beschriebenen Verfahren wird die Einstellung einer gewünschten Vorspannung zwischen den beiden Wälzlagern durch eine Einklemmung des verformbaren Bauteils zwischen den äußeren Lagerringen der Wälzlager durchgeführt.

## Patentansprüche

1. Verfahren zur Montage einer Wälzlagerung (6, 7) auf einen Rotor (4) und in das Lagergehäuse eines Turboladers mit folgenden Schritten:
- Einlegen eines durch Ausübung von Druck verformbaren Bauteils (14) in den Zwischenraum zwischen zwei Wälzlagern (6,7) der Rotorbaugruppe (4), zu welcher eine Rotorwelle (5), an der Rotorwelle befestigte oder in die Rotorwelle integrierte, voneinander einen Abstand aufweisende innere Lagerringe (8,9), in die inneren Lagerringe eingesetzte Wälzkörper (10,11) und ebenfalls einen Abstand voneinander aufweisende äußere Lagerringe (12,13) gehören, und
- Verformung des in den Zwischenraum zwischen den beiden Wälzlagern eingelegten Bauteils (14) durch Ausübung von Druck zur Einstellung einer gewünschten axialen Vorspannung zwischen den beiden Wälzlagern (6,7)
**dadurch gekennzeichnet,**
**dass** die Verformung des in den Zwischenraum zwischen den beiden Wälzlagern (6,7) eingelegten Bauteils (14) derart vorgenommen wird, dass sich das verformte Bauteil an eine nicht umfangssymmetrische Form der äußeren Lagerringe (12,13) und des Innenmantels (3) des Lagergehäuses (1) anpasst, zur Bildung einer Verdrehsicherung der äußeren Lagerringe (12, 13) gegenüber dem verformten Bauteil (14) und dem Lagergehäuse (1) .

2. Verfahren nach Anspruch 1, **dadurch gekennzeichnet, dass** die Verformung des in den Zwischenraum zwischen den beiden Wälzlagern eingelegten Bauteils (14) durch Ausübung von hydraulischem, pneumatischem und/oder mechanischem Druck vorgenommen wird.

3. Verfahren nach Anspruch 2, **dadurch gekennzeichnet, dass** die Verformung des in den Zwischenraum zwischen den beiden Wälzlagern eingelegten Bauteils (14) im Lagergehäuse (1) des Turboladers erfolgt.

4. Verfahren nach Anspruch 2, **dadurch gekennzeichnet, dass** die Verformung des in den Zwischenraum zwischen den beiden Wälzlagern eingelegten Bauteils (14) in einer externen Verformvorrichtung (16) erfolgt.

5. Verfahren nach Anspruch 4, **dadurch gekennzeichnet, dass** die Rotorbaugruppe (4) mit dem verformten Bauteil (14) in das Lagergehäuse (1) des Turboladers eingesetzt wird.

6. Turbolader, welcher eine in ein Lagergehäuse (1) eingesetzte, zwei Wälzlager (6,7) aufweisende Rotorbaugruppe (4) aufweist, zu welcher eine Rotorwelle (5), an der Rotorwelle befestigte oder in die Rotorwelle integrierte, voneinander einen Abstand aufweisende innere Lagerringe (8,9), in die inneren Lagerringe eingesetzte Wälzkörper (10,11) und ebenfalls einen Abstand voneinander aufweisende äußere Lagerringe (12,13) gehören, wobei die Rotorbaugruppe (4) ein im Zwischenraum zwischen den beiden Wälzlagern (6,7) angeordnetes verformtes Bauteil (14) aufweist, durch dessen Verformung eine axiale Vorspannung zwischen den äußeren Lagerringen der Wälzkörper eingestellt ist,
**dadurch gekennzeichnet,**
**dass** die äußeren Lagerringe (12,13) und der Innenmantel (3) des Lagergehäuses (1) eine nicht umfangssymmetrische Form aufweisen und das verformte Blechbauteil (14) an die nicht umfangssymmetrische Form der äußeren Lagerringe (12,13) und des Innenmantels (3) des Lagergehäuses (1) angepasst ist zur Bildung einer Verdrehsicherung der äußeren Lagerringe (12, 13) gegenüber dem verformten Bauteil (14) und dem Lagergehäuse (1).

## Claims

1. Method for mounting a rolling bearing arrangement (6, 7) onto a rotor (4) and into the bearing housing of a turbocharger, having the following steps:
- inserting a component (14), which is deformable under the exertion of pressure, into the intermediate space between two rolling bearings (6, 7) of the rotor assembly (4), which rotor assembly includes a rotor shaft (5), inner bearing rings (8, 9) which are fastened to the rotor shaft or integrated into the rotor shaft and which have a spacing to one another, rolling bodies (10, 11) which are inserted into the inner bearing rings, and outer bearing rings (12, 13) which likewise have a spacing to one another, and
- deforming, by exertion of pressure, the component (14) that has been inserted into the intermediate space between the two rolling bearings, in order to set a desired axial preload between the two rolling bearings (6, 7),
**characterized**
**in that** the deformation of the component (14) that has been inserted into the intermediate space between the two rolling bearings (6, 7) is performed such that, to form a rotation prevention means, the deformed component adapts to a circumferentially asymmetrical shape of the outer bearing rings (12, 13) and of the inner shell (3) of the bearing housing (1), to form a rotation prevention means of the outer bearing rings (12, 13) with respect to the deformed component (14) and the bearing housing (1).

2. Method according to Claim 1, **characterized in that** the deformation of the component (14) that has been inserted into the intermediate space between the two rolling bearings is performed by exertion of hydraulic, pneumatic and/or mechanical pressure.

3. Method according to Claim 2, **characterized in that** the deformation of the component (14) that has been inserted into the intermediate space between the two rolling bearings is performed in the bearing housing (1) of the turbocharger.

4. Method according to Claim 2, **characterized in that** the deformation of the component (14) that has been inserted into the intermediate space between the two rolling bearings is performed in an external deformation device (16).

5. Method according to Claim 4, **characterized in that** the rotor assembly (4) with the deformed component (14) is inserted into the bearing housing (1) of the turbocharger.

6. Turbocharger which has a rotor assembly (4) which has been inserted into a bearing housing (1) and which has two rolling bearings (6, 7), which rotor assembly includes a rotor shaft (5), inner bearing rings (8, 9) which are fastened to the rotor shaft or integrated into the rotor shaft and which have a spacing to one another, rolling bodies (10, 11) which are inserted into the inner bearing rings, and outer bearing rings (12, 13) which likewise have a spacing to one another, wherein the rotor assembly (4) has a deformed component (14) arranged in the intermediate space between the two rolling bearings (6, 7), by means of the deformation of which component an axial preload between the outer bearing rings of the rolling bodies is set,
**characterized**
**in that** the outer bearing rings (12, 13) and the inner shell (3) of the bearing housing (1) have an asymmetrical shape, and the deformed sheet-metal component (14) is adapted to the circumferentially asymmetrical shape of the outer bearing rings (12, 13) and of the inner shell (3) of the bearing housing (1), to form a rotation prevention means of the outer bearing rings (12, 13) with respect to the deformed component (14) and the bearing housing (1).

## Revendications

1. Procédé de montage d'un palier à roulement (6, 7) sur un rotor (4) et dans le logement de palier d'un turbocompresseur, comprenant les étapes suivantes :
- insertion d'un composant (14) déformable par l'application d'une pression dans l'espace intermédiaire entre deux paliers à roulement (6, 7) de l'ensemble de rotor (4), dont font partie un arbre de rotor (5), des bagues de palier intérieures (8, 9) espacées les unes des autres d'une certaine distance, fixées à l'arbre de rotor ou intégrées dans l'arbre de rotor, des corps de roulement (10, 11) insérés dans les bagues de palier intérieures et des bagues de palier extérieures (12, 13) également espacées les unes des autres d'une certaine distance, et
- déformation du composant (14) inséré dans l'espace intermédiaire entre les deux paliers à roulement par application d'une pression pour régler une précontrainte axiale souhaitée entre les deux paliers à roulement (6, 7),
**caractérisé en ce que**
la déformation du composant (14) inséré dans l'espace intermédiaire entre les deux paliers à roulement (6, 7) est effectuée de telle sorte que le composant déformé s'adapte à une forme non symétrique de manière périphérique des bagues de palier extérieures (12, 13) et de l'enveloppe intérieure (3) du logement de palier (1), pour former une fixation anti-rotation des bagues de palier extérieures (12, 13) par rapport au composant déformé (14) et au logement de palier (1).

2. Procédé selon la revendication 1, **caractérisé en ce que** la déformation du composant (14) inséré dans l'espace intermédiaire entre les deux paliers à roulement est effectuée par application d'une pression hydraulique, pneumatique et/ou mécanique.

3. Procédé selon la revendication 2, **caractérisé en ce que** la déformation du composant (14) inséré dans l'espace intermédiaire entre les deux paliers à roulement s'effectue dans le logement de palier (1) du turbocompresseur.

4. Procédé selon la revendication 2, **caractérisé en ce que** la déformation du composant (14) inséré dans l'espace intermédiaire entre les deux paliers à roulement s'effectue dans un dispositif de déformation externe (16).

5. Procédé selon la revendication 4, **caractérisé en ce que** l'ensemble de rotor (4) doté du composant déformé (14) est inséré dans le logement de palier (1) du turbocompresseur.

6. Turbocompresseur, lequel comprend un ensemble de rotor (4) inséré dans un logement de palier (1) et comprenant deux paliers à roulement (6, 7), ensemble de rotor dont font partie un arbre de rotor (5), des bagues de palier intérieures (8, 9) espacées les unes des autres d'une certaine distance, fixées à l'arbre de rotor ou intégrées dans l'arbre de rotor, des corps de roulement (10, 11) insérés dans les bagues de palier intérieures et des bagues de palier extérieures (12, 13) également espacées les unes des autres d'une certaine distance, dans lequel l'ensemble de rotor (4) comprend un composant déformé (14) disposé dans l'espace intermédiaire entre les deux paliers à roulement (6, 7), composant par la déformation duquel est réglée une précontrainte axiale entre les bagues de palier extérieures des corps de roulement,
**caractérisé en ce que**
les bagues de palier extérieures (12, 13) et l'enveloppe intérieure (3) du logement de palier (1) présentent une forme non symétrique de manière périphérique et le composant en tôle (14) déformé est adapté à la forme non symétrique de manière périphérique des bagues de palier extérieures (12, 13) et de l'enveloppe intérieure (3) du logement de palier (1) pour former une fixation anti-rotation des bagues de palier extérieures (12, 13) par rapport au composant déformé (14) et au logement de palier (1).
